# EUROPÄISCHE PATENTSCHRIFT

(11) **EP 0 502 332 B1**
(45) Veröffentlichungstag und Bekanntmachung des Hinweises auf die Patenterteilung: **06.09.1995**
(21) Anmeldenummer: 92101959.2
(22) Anmeldetag: 06.02.1992
(51) Int. Cl.: B60G 17/015, G01P 3/52

(54) **Federbein für ein Fahrwerk eines Kraftfahrzeuges**
Suspension strut for the chassis of an automotive vehicle
Jambe de suspension pour le châssis d'un véhicule automobile

(30) Priorität: 07.03.1991 DE 4107292
(43) Veröffentlichungstag der Anmeldung: 09.09.1992
(73) Patentinhaber: AUGUST BILSTEIN GMBH & CO. KG, 58240 Ennepetal (DE)
(72) Erfinder: Huang, Zhen, Dr.-Ing., W-5600 Wuppertal 1 (DE)

(56) Entgegenhaltungen:
- EP-A- 0 388 671
- EP-A- 0 438 815
- DE-C- 3 909 190
- US-A- 4 949 573
- US-A- 4 970 645

## Beschreibung

Die Erfindung bezieht sich auf ein Einrohr- oder Zweirohrfederbein für ein semiaktives Fahrwerk für Kraftfahrzeuge, bestehend aus einem Zylinderrohr, das am unteren Ende durch ein Bodenteil und am oberen Ende durch eine Kolbenstangenführung begrenzt wird, wobei bei einem Zweirohrfederbein das Bodenteil ein Bodenventil beinhaltet. Der mit der Kolbenstange verbundene und steuerbare Ventile tragende Kolben teilt das Zylinderrohr in zwei Arbeitsräume. Das Federbein weist weiterhin einen eine Schraubenfeder aufnehmenden Federteller auf, der beim Einrohrfederbein am Zylinderrohr und beim Zweirohrfederbein an einem das Zylinderrohr umgebenden Außenrohr befestigt ist. Der die Begrenzung des Rad- Ausfederweges übernehmende Zuganschlag befindet sich oberhalb des Kolbens an der Kolbenstange. Derartige Federbeine werden als Bindeglieder zur Aufnahme der wirkenden Biegemomente und zur Übertragung der Schwingungen von der Fahrbahnoberfläche über das Rad-Federsystem auf die Karosserie, insbesondere für die Kraftfahrzeug-Vorderachse, eingesetzt. Zur Gewährleistung eines hohen Fahrkomforts als auch einer größeren Fahrsicherheit kommen sehr oft Federbeine mit semiaktiver oder aktiver Dämpfungsregelung zum Einsatz. Für eine solche Regelung ist es notwendig, die unterschiedlichsten Bewegungsgrößen, wie Relativgeschwindigkeit zwischen Aufbau und Achse oder die Aufbaubeschleunigung zu messen und auf eine Regeleinrichtung, die eine Stellgröße zur Veränderung der Dämpfungskraft erzeugt, zu führen.

In der deutschen Patentschrift DE-PS 39 09 190 wird ein Relativgeschwindigkeitssensor für einen Schwingungsdämpfer beschrieben. Der Sensor besteht aus einer zylindrischen Spule, welche sich in der mit der Kolbenstange verbundenen Abdeckung befindet, und einen Dauermagneten, welcher an der Führungsverschlußseite des Dämpfungszylinders angeordnet ist. Der Sensor liefert über die induzierte Spannung in der Sensorwicklung ein Signal für die Relativgeschwindigkeit. Dieser in einem Schwingungsdämpfer exakt arbeitende Sensor würde bei einem Einsatz in einem Federbein zu Meßungenauigkeiten, die die Regelung unbrauchbar machen, führen, da die bei einem Federbein auf dem Federteller des Außenrohrs aufsitzende Schraubenfeder hier ebenfalls als Spule wirkt. Durch die Relativbewegung zwischen der Schraubenfeder und der Sensorwicklung und die sich verändernde Wicklungsweite der Schraubenfeder entsteht eine veränderliche Störinduktion, die durch die Auswerteelektronik nicht kompensiert werden kann. Anderseits werden bei Federbeinen oft wegen des Platzbedarfs keine Abdeckungen oder biegsame Falten aufweisende Gummischutzrohre verwendet, die eine Anordnung der Sensorwicklung gemäß dem Stand der Technik nicht zulassen.

In der Schrift EP-A-0-388 671 wird ein Federbein mit Relativgeschwindigkeitssensor gemäß dem Oberbegriff des Anspruchs 1 beschrieben.

Der Erfindung liegt die Aufgabe zugrunde, ein Federbein für ein semiaktives Fahrwerk zu schaffen, bei dem ohne Verwendung von komplizierten und aufwendigen Sensoren die Relativgeschwindigkeit zwischen Aufbau und Achse zur Erzeugung einer Stellgröße für die Veränderung der Dämpfungskraft gemessen werden kann und die durch die Schraubenfeder entstehende veränderlich Störinduktion das Meßergebnis nicht beeinflußt.

Die Aufgabe wird durch ein Federbein für ein semiaktives oder aktives Fahrwerk nach den Merkmalen der Patentansprüche gelöst, wobei die Sensorwicklung vorzugsweise die Kolbenstange unterhalb des Zuganschlages umgibt und der Dauermagnet an oder in der Innenwandung des Zylinderrohrs angeordnet ist. Die elektrischen Anschlüsse sind durch die hohle Kolbenstange nach außen geführt. Eine vorteilhafte Ausführung besteht außerdem darin, die Sensorwicklung axial in der hohlen Kolbenstange anzuordnen, wenn diese aus einem nichtmagnetisierbaren Material besteht. Wurde das Zylinderrohr aus einem nichtmagnetisierbaren Material gefertigt, ist es günstig den Dauermagneten an der Außenwandung des Zylinderrohrs oder an der Innenwandung des Außenrohrs zu befestigen bzw. die als zylindrische Spule ausgebildete Sensorwicklung zwischen Außenwandung des aus nicht magnetisierbaren Material bestehenden Zylinderrohrs und Innenwandung des Außenrohrs und den Dauermagneten an der Kolbenstange anzuordnen.

Die Erfindung wird anhand eines Ausführungsbeispiels näher erläutert. Die zugehörigen Zeichnungen zeigen:
- Fig. 1: ein Einrohrfederbein mit den der Kolbenstange umgebenden Sensorwicklung und
- Fig. 2: ein Zweirohrfederbein mit der in der hohlen Kolbenstange angeordneten Sensorwicklung und einem mit dem Zylinderrohr verbundenen Dauermagneten
- Fig. 3: ein Zweirohrfederbein mit der an der Außenwandung des Zylinderrohrs angeorndeten Sensorwicklung und einem mit der Kolbenstange verbundenen Dauermagneten.

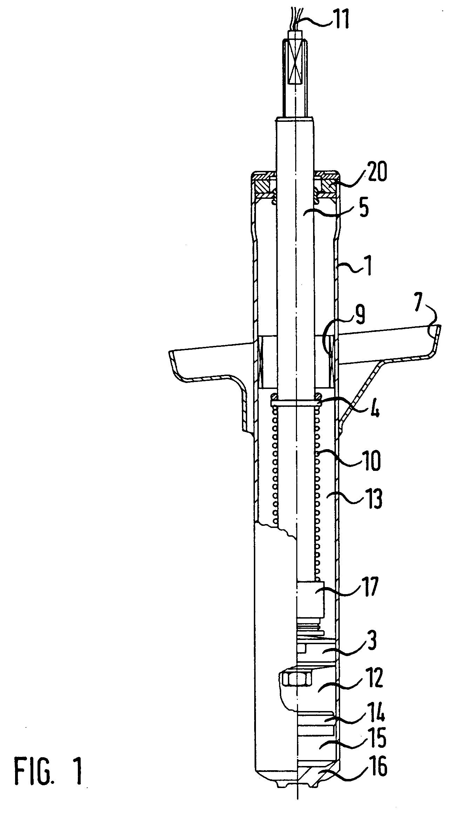

Das in Fig. 1 dargestellte regelbare Einrohrfederbein besteht im wesentlichen aus einem Zylinderrohr 1, das am unteren Ende durch das Bodenteil 16 und oben durch die Kolbenstangenführung 20 abdichtend begrenzt wird und einer in das Zylinderrohr eintauchenden in einem Dämpfungskolben 3 endenden Kolbenstange 5. Der mit steuerbaren Ventilen versehene Dämpfungskolben 3 trennt das Zylinderrohr 1 in zwei Arbeitsräume 12, 13. Der untere Arbeitsraum 12 wird von einem Trennkolben 14 begrenzt. Der gasgefüllte Ausgleichsraum 15 dient zur Kompensation des Volumenzu- bzw. -abnahme im hydraulischen Arbeitsraum durch das ein- bzw. ausfahrende Eigenvolumen der Kolbenstange 5. Weiterhin trägt das Zylinderrohr 1 den die Schraubenfeder aufnehmenden Federteller 7, der sowohl lösbar als auch fest mit dem Rohr verschweißt sein kann. Zur Begrenzung des Rad- Ausfederungsweges trägt die Kolbenstange 5 einen Zuganschlag 4.

Die als zylindrische Spule ausgebildete Sensorwicklung 10 umgibt die Kolbenstange 5 unterhalb des Zuganschlages 4, wobei die Anschlüsse 11 der Sensorwicklung kurz unterhalb des Zuganschlages 4 in die hohle Kolbenstange 5 eingeführt und in dieser beanspruchungsfrei nach außen geführt werden. Der die Sensorwicklung umgebende, zum Beispiel als Ringmagnet ausgeführte Dauermagnet 9 wurde an der Innenwandung des Zylinderrohrs 1 angeordnet. Federt nun aufgrund einer Fahrbahnunebenheit das Rad aus, wird das Zylinderrohr 1 nach unten gezogen und der Dauermagnet 9 bewegt sich um die Sensorwicklung 10 nach unten. Durch diese Bewegung induziert er in der Wicklung eine Spannung proportional zur Relativgeschwindigkeit zwischen Dämpfungskolben 3 und Zylinderrohr 1.

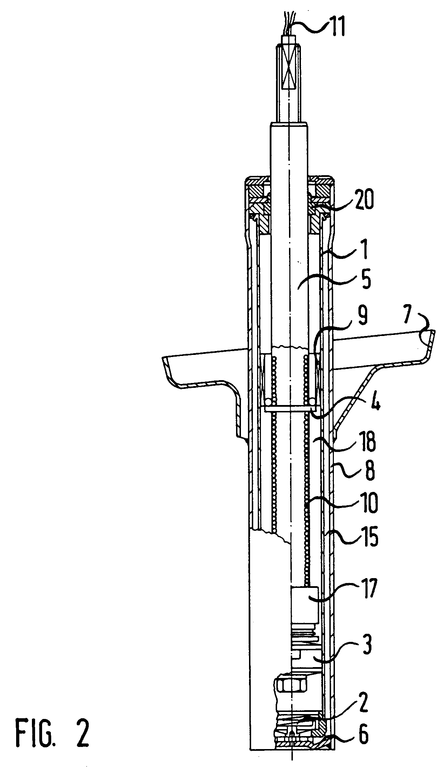

Das nach dem Zweirohrprinzip arbeitende in Fig. 2 dargestellte Federbein besteht aus dem Arbeitsraum 18, der durch das Zylinderrohr 1 gebildet wird und am unteren Ende durch das Bodenventil 2 und oben durch die abdichtende Kolbenstangenführung 20 begrenzt wird. In der Kolbenstangenführung 20 gleitet die Kolbenstange 5, die im Arbeitsraum 18 den mit steuer- oder regelbaren Ventilen 17 ausgestatteten Dämpfungskolben 3 aufnimmt. Das Zylinderrohr 1 wird von einem Außenrohr 8 umgeben. Zwischen beiden befindet sich der Ausgleichsraum 15, der etwa bis auf halbe Höhe mit Öl gefüllt ist, während der Arbeitsraum 18 volle Ölfüllung aufweist. Das Außenrohr 8 verbindet die Kolbenstangenführung 20 mit der das Bodenventil abstützenden Bodenkappe 6 und trägt den eine nicht dargestellte Schraubenfeder aufnehmenden Federteller 7. Die aus nichtmagnetisierbaren Material, zum Beispiel aus nichtmagnetisierbaren Chrom - Nickel - Stahl, gefertigte Kolbenstange 5 trägt zur Begrenzung des Rad-Ausfederungsweges einen Zuganschlag 4. Die Sensorwicklung 10 kann somit axial in der hohlen Kolbenstange 5 angeordnet und die Wicklungsanschlüsse in der Kolbenstange nach außen zur Auswertung geführt werden. Der Dauermagnet 9 zur Erzeugung der Induktionsspannung befindet sich auch hier an der Innenwandung des Zylinderrohrs 1. Es besteht jedoch die Möglichkeit, das Zylinderrohr ebenfalls aus nichtmagnetisierbaren Material zu fertigen und den Dauermagneten 9 zwischen der Außenwandung des Zylinderrohrs 1 und der Innenwandung des Außenrohrs 8 anzuordnen.

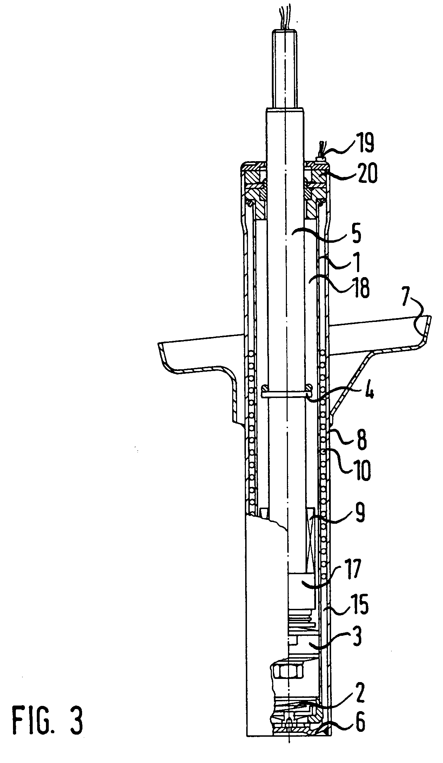

Fig. 3 zeigt ein Zweirohrfederbein, das entgegengesetzt aufgebaut ist. Die Sensorwicklung 10 zur Erfassung der Relativgeschwindigkeit von Fahrzeugaufbau und -achse liegt an der Außenwandung des aus nichtmagnetisierbaren Material bestehenden Zylinderrohrs 1, wobei denkbar wäre, die Wicklung auch an der Innenwandung des Außenrohrs 8 anzuordnen. Die elektrischen Anschlüsse 11 der Wicklungen wurden bei dieser Lösung im Ausgleichsraum 15 nach außen geführt und mit einem in der Kolbenstangenführung 20 angeordneten mehrpoligen Stecker 19 verbunden. Der vorzugsweise als Ringmagnet ausgebildete Dauermagnet 9 umschließt fest die Kolbenstange 5 oberhalb des Magnetventils 17.

Bei den in Fig. 1 und Fig. 3 gezeigten Varianten ist es nicht zwingend, die Kolbenstange 5 aus nichtmagnetisierbaren Material zu fertigen, da bei der Sensierung der Einfluß der Kolbenstange 5 als berechenbare Größe eingeht, die in der nicht dargestellten Auswerteschaltung eleminiert werden kann. Ebenso kann der Einfluß des Zylinderrohrs 1 der Varianten in Fig. 1 und 2 errechnet und kompensiert werden. Die eine veränderliche Windungsweite besitzende Stützfeder beeinflußt bei dieser Anordnung des Meßergebnis nicht. Bei dem erfindungsgemäßen Federbein wurde ohne Minderung der Gleitlänge des Federbeins ein geschützter und einer geringen Beanspruchung ausgesetzter unkomplizierter Geschwindigkeitssensor zur Messung der Relativgeschwindigketi zwischen Fahrzeugaufbau und -achse geschaffen.

## Patentansprüche

1. Federbein für ein Fahrwerk eines Kraftfahrzeuges, bestehend aus einem Zylinderrohr, das an einem Ende durch eine abdichtende Kolbenstangenführung und am anderen Ende durch ein Bodenteil begrenzt wird, einer in diesen eintauchenden, in einem Dämpfungskolben endenden, einen Zuganschlag aufweisenden Kolbenstange, wobei der Dämpfungskolben steuerbare Ventile aufweist, einem Federteller zur Aufnahme der Schraubenfeder und einem Relativgeschwindigkeitssensor, wobei der Geschwindigkeitssensor eine mit einem Dauermagneten zusammenwirkende, als zylindrische Spule ausgebildete Sensorwicklung (10) aufweist, deren Anschlüsse (11) nach außen geführt sind,
**dadurch gekennzeichnet,**
daß die Sensorwicklung innerhalb des Zylinderrohres (1) bzw. innerhalb des bei einem Zweirohrfederbein das Zylinderrohr (1) umgebenden Außenrohrs (8) angeordnet ist.

2. Federbein nach Anspruch 1,
**dadurch gekennzeichnet,**
daß die Sensorwicklung mit der Kolbenstange (5) in Wirkverbindung steht und der Dauermagnet (9) direkt oder indirekt mit dem Zylinderrohr (1) verbunden ist, wobei die Anschlüsse (11) der Sensorwicklung (10) durch die hohle Kolbenstange (5) nach außen geführt sind.

3. Federbein nach Anspruch 1,
**dadurch gekennzeichnet,**
daß die Sensorwicklung (10) mit dem Zylinderrohr (1) in Wirkverbindung steht und der Dauermagnet (9) an der Kolbenstange (5) angeordnet ist, wobei die Anschlüsse der Sensorwicklung (10) nach außen geführt sind.

4. Federbein nach Anspruch 2 oder 3,
**dadurch gekennzeichnet,**
daß bei einem Zweirohrfederbein das das Zylinderrohr (1) begrenzende Bodenteil ein Bodenventil (2) aufweist und das Zylinderrohr (1) als Innenrohr von einem mit dem Federteller (7) zur Aufnahme der Schraubenfeder versehenen Außenrohr (8) umgeben ist.

5. Federbein nach einem oder mehreren der Ansprüche 2 und 4,
**dadurch gekennzeichnet,**
daß die Sensorwicklung (10) die Kolbenstange (5) unterhalb des Zuganschlages (4) umgibt.

6. Federbein nach einem oder mehreren der Ansprüche 2 und 4,
**dadurch gekennzeichnet,**
daß die Kolbenstange (5) aus nichtmagnetisierbarem Material besteht und die als zylindrische Spule ausgebildete Sensorwicklung (10) axial in der hohlen Kolbenstange (5) angeordnet ist.

7. Federbein nach einem oder mehreren der Ansprüche 2 bis 6,
**dadurch gekennzeichnet,**
daß der Dauermagnet (9) an oder in der Innenwandung des Zylinderrohres (1) angeordnet ist.

8. Federbein nach einem oder mehreren der Ansprüche 2 bis 6,
**dadurch gekennzeichnet,**
daß das Zylinderrohr (1) aus nichtmagnetisierbarem Material besteht.

9. Federbein nach Anspruch 8,
**dadurch gekennzeichnet,**
daß der Dauermagnet (9) an der Außenwandung des Zylinderrohres (1) angeordnet ist.

10. Federbein nach Anspruch 8,
**dadurch gekennzeichnet,**
daß der Dauermagnet (9) an der Innenwandung des Außenrohres (8) angebracht ist.

11. Federbein nach Anspruch 2 oder 3,
**dadurch gekennzeichnet,**
daß bei einem Zweirohrfederbein die als zylindrische Spule ausgebildete Sensorwicklung (10) an der Außenwandung des Zylinderrohres (1) angeordnet ist.

12. Federbein nach Anspruch 2 oder 3,
**dadurch gekennzeichnet,**
daß bei einem Zweirohrfederbein die als zylindrische Spule ausgebildete Sensorwicklung (10) an der Innenwandung des Außenrohres (8) angeordnet ist.

## Claims

1. Shock absorbing leg for a chassis of a motor vehicle consisting of a cylinder tube which is delimited at one end by means of a seal-forming piston rod guide and at the other end by means of a base part and furthermore a piston rod which is plunged into this bottom part, ends in a damping piston and comprises a movement stop, wherein the damping piston comprises controllable valves, furthermore a spring plate for receiving the helical spring and furthermore a relative velocity sensor, wherein the velocity sensor comprises a sensor winding (10) designed as a cylindrical coil which interacts with a permanent magnet and the connections (11) of the said sensor winding are arranged outwardly, characterised in that the sensor winding is arranged within the cylinder tube (1) and within the outer tube (8) which in the case of the two-tube shock absorbing leg surrounds the cylinder tube (7).

2. Shock absorbing leg according to claim 1, characterised in that the sensor winding is operatively connected to the piston rod (5) and the permanent magnet (9) is connected directly or indirectly to the cylinder tube (1), wherein the connections (11) of the sensor winding (10) are outwardly arranged through the hollow piston rod (5).

3. Shock absorbing leg according to claim 1, characterised in that the sensor winding (10) is operatively connected to the cylinder tube (1) and the permanent magnet (9) is arranged at the piston rod (5), wherein the connections of the sensor winding (10) are arranged towards the outside.

4. Shock absorbing leg according to claim 2 or 3, characterised in that in the case of a two-tube shock absorbing leg the base part defining the cylinder tube (1) comprises a base valve (2) and the cylinder tube (1) as an inner tube is surrounded by an outer tube (8) provided with the spring plate (7) for the purpose of receiving the helical spring.

5. Shock absorbing leg according to any one or several of claims 2 and 4, characterised in that the sensor winding (10) surrounds the piston rod (5) below the movement stop (4).

6. Shock absorbing leg according to any one or several of claims 2 and 4, characterised in that the piston rod (5) comprises a non-magnetic material and the sensor winding (10) designed as a cylindrical coil is arranged axially in the hollow piston rod (5).

7. Shock absorbing leg according to any one or several of claims 2 to 6, characterised in that the permanent magnet (9) is arranged on or in the inner wall of the cylinder tube (1).

8. Shock absorbing leg according to any one or several of claims 2 to 6, characterised in that the cylinder tube (1) comprises a non-magnetic material.

9. Shock absorbing leg according to claim 8, characterised in that the permanent magnet (9) is arranged on the outer wall of the cylinder tube (1).

10. Shock absorbing leg according to claim 8, characterised in that the permanent magnet (9) is attached to the inner wall of the outer tube (8).

11. Shock absorbing leg according to claim 2 or 3, characterised in that in the case of a two-tube shock absorbing leg the sensor winding (10) which is designed as a cylindrical coil is arranged on the outer wall of the cylinder tube (1).

12. Shock absorbing leg according to claim 2 or 3, characterised in that in the case of a two-tube shock absorbing leg the sensor winding (10) which is designed as a cylindrical coil is arranged on the inner wall of the outer tube (8).

## Revendications

1. Jambe de force pour train de roulement de véhicule à moteur, constituée d'un tube cylindrique limité à une extrémité par un guide de tige de piston étanche et à l'autre extrémité par une pièce de socle, d'une tige de piston s'enfonçant dans ce cylindre, se terminant en un piston d'amortissement et présentant une butée de traction, le piston d'amortissement présentant des clapets asservis, d'une cuvette de ressort pour reprendre le ressort hélicoïdal, et d'un détecteur de vitesse relative, dans laquelle le détecteur de vitesse présente un bobinage (10) de détection réalisé sous la forme d'une bobine cylindrique coopérant avec un aimant permanent, dont les raccords (11) sont conduits vers l'extérieur, caractérisée en ce que le bobinage de détection est disposé à l'intérieur du tube cylindrique (1) ou à l'intérieur du tube externe (8) entourant le tube interne (1) d'une jambe de force à tube double.

2. Jambe de force selon la revendication 1, caractérisée en ce que le bobinage de détection est en liaison de travail avec la tige de piston (5), et l'aimant permanent (9) est en liaison directe ou indirecte avec le tube cylindrique (1), tandis que les raccords (11) du bobinage de détection (10) sont conduits vers l'extérieur par la tige de piston creuse (5).

3. Jambe de force selon la revendication 1, caractérisée en ce que le bobinage de détection (10) est en liaison de travail avec le tube cylindrique (1), et l'aimant permanent (9) est disposé sur la tige de piston (5), tandis que les raccords du bobinage de détection (10) sont conduits vers l'extérieur.

4. Jambe de force selon la revendication 2 ou 3, caractérisée en ce que la partie de socle limitant le tube cylindrique (1) dans une jambe de force à tube double présente un clapet de pied (2), et le tube cylindrique (1) est entouré comme tube interne, par un tube externe (8) pourvu d'une cuvette de ressort (7) pour recevoir le ressort hélicoïdal.

5. Jambe de force selon l'une ou plusieurs des revendications 2 et 4, caractérisée en ce que le bobinage de détection (10) entoure la tige de piston (5) en dessous de la butée de traction (4).

6. Jambe de force selon l'une ou plusieurs des revendications 2 et 4, caractérisée en ce que la tige du piston (5) est constituée d'un matériau non magnétique, et le bobinage de détection (10) se présentant sous la forme d'une bobine cylindrique est disposé axialement dans la tige de piston (5) creuse.

7. Jambe de force selon l'une ou plusieurs des revendications 2 à 6, caractérisée en ce que l'aimant permanent (9) est disposé sur ou dans la paroi interne du tube cylindrique (1).

8. Jambe de force selon l'une ou plusieurs des revendications 2 à 6, caractérisée en ce que le tube cylindrique (1) est constitué d'un matériau non magnétique.

9. Jambe de force selon la revendication 8, caractérisée en ce que l'aimant permanent (9) est disposé sur la paroi externe du tube cylindrique (1).

10. Jambe de force selon la revendication 8, caractérisée en ce que l'aimant permanent (9) est installé sur la paroi interne du tube externe (8).

11. Jambe de force selon la revendication 2 ou 3, caractérisée en ce que, dans une jambe de force à tube double, le bobinage de détection (10) se présentant sous la forme d'une bobine cylindrique, est disposé sur la paroi externe du tube cylindrique (1).

12. Jambe de force selon la revendication 2 ou 3, caractérisée en ce que, dans une jambe de force à tube double, le bobinage de détection (10) se présentant sous la forme d'une bobine cylindrique est disposé sur la paroi interne du tube externe (8).
